# EUROPEAN PATENT APPLICATION

(11) **EP 4 571 277 A1**
(43) Date of publication of application: **18.06.2025**
(21) Application number: 23383272.4
(22) Date of filing: 11.12.2023
(51) Int. Cl.: G01J 3/10, G01S 7/484, G01M 11/00, G01B 9/02003, G01D 5/26, G01J 3/453

(54) **METHOD AND SYSTEM FOR PARALLELIZING INTERFEROGRAM DETECTION IN DUAL COMB SPECTROSCOPY-BASED TECHNOLOGY**

(71) Applicant: Aragon Photonics Labs, S.L., 50009, Zaragoza (ES)
(72) Inventor: FERNÁNDEZ RUIZ, María del Rosario, Alcalá de Henares (ES); GONZÁLEZ HERRÁEZ, Miguel, Alcalá de Henares (ES); MARTÍN LÓPEZ, Sonia, Alcalá de Henares (ES); LÓPEZ TORRES, Francisco Manuel, Zaragoza (ES); SORIANO AMAT, Miguel, Alcalá de Henares (ES); ESCOBAR VERA, Camilo, Alcalá de Henares (ES)
(74) Representative: Balder IP Law, S.L.

(57) **Abstract**

Method for measuring the spectral response of a linear system, which comprises injecting a first optical comb or probe comb into a system to be spectrally sampled, at a first repetition rate ***Δf**,* the bandwidth of the probe comb being ***N·Δf**,* gathering the optical output signal from the system to be spectrally sampled, beating the optical output signal with a local oscillator signal to generate a beating signal, wherein the local oscillator signal comprises a second optical frequency comb, at a second repetition rate that is an integer multiple of the first repetition rate plus an offset, ***Δf'*=*M·Δf*+*****δf**,* with ***M*** any positive integer. The invention also relates to a system for carrying out the method.

## Description

### TECHNICAL FIELD

In general, the present invention relates to technology based on optical comb spectroscopy techniques, with particular attention to distributed optical fiber sensing. By employing a smart, non-conventional configuration of dual frequency comb, it is possible to parallelize the optical interferogram detection and acquisition, permitting a speed up of the acquisition rate of several orders of magnitude while preserving sharp resolution and relaxed requirements in the detection and acquisition systems. The proposed configuration and methodology is compatible with measurement systems such as optical sensing, LIDAR or dynamic imaging.

### STATE OF THE ART

Optical spectroscopy is a powerful and non-intrusive real-time analysis tool for sampling media, materials and systems. This technique is simply based on the analysis of the interaction between light and matter, mainly through the measurement of absorption, emission, scattering or rotation of light by atoms or molecules. The advent of optical frequency combs (OFC) was an important step forward the establishment of highly precision spectroscopy.

OFC are optical signals whose spectrum provides a broad and uniformly spaced modal structure with high frequency accuracy. As broader-band combs were employed to improve the time-domain resolution, spectrally resolving the comb lines became a more challenging task, in turn increasing the bandwidth requirements of detectors and the speed needs of instrumentation. Dual comb spectroscopy arose as a solution to efficiently resolve all the spectral lines of a broadband source with a single photodetector while maintaining the frequency accuracy and spectral resolution, and allowing for long interrogation paths with high sensitivity.

The dual comb spectroscopy relies on the use of a dual frequency comb (DFC), i.e., a pair of identical OFC with slightly different repetition rate. For example, the repetition rates of the two combs may be Δ***f*** and Δ***f*'=**Δ***f*+*δf***, respectively, being ***δf**<<*Δ***f**.* Either one or both combs travel through the sample, depending on whether the detection of the magnitude and phase or simply the magnitude of the spectral domain information of the sample are targeted in the procedure, respectively.

When a single comb passes through the sample, the second comb is used as a reference (or local oscillator, LO). Then, the combs are mixed and detected in a single photodetector. The beating between the two combs produces an efficient downconversion of the sampled optical spectral response to the radio-frequency (RF) domain, which can readily accessible with RF electronics.

The use of DFC to sample the spectral response of a medium, material or system entails a stringent trade-off between important parameters of a spectroscopic measurement. In particular, to unambiguously obtain the complete information of the spectrum to be detected in the RF domain, the offset between the repetition rates of the two involved combs, namely ***δf***, is limited by half of the ratio between the repetition rate of the probe comb and the number of comb lines ***N***, i.e., ***δf<(0.5***·Δ***f)***/***N**.*

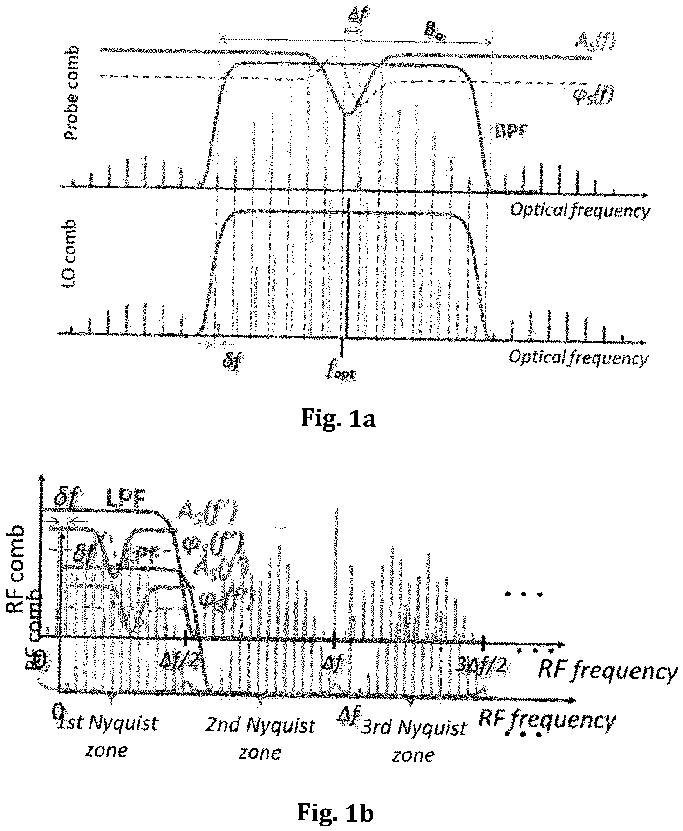

The reason is related to the fact that the beating between all probe and LO optical tones are clustered in the RF domain around multiples of the probe's repetition rate, in spectral regions known as Nyquist zones (see Fig. 1). When the abovementioned condition is satisfied, the beating between neighbouring pair of lines is confined in the so-called first Nyquist zone, evading any overlapping with other "higher-order" beating lines. A high-order beating line is understood as the beating between probe and LO lines optically separated more than half of the probe's repetition rate (i.e., Δ***f*/*2***).

The cited trade-off implies that combs densely populated for applications requiring high spectral and temporal resolution will severely limit the acquisition speed.

Nowadays, the use of DFC has gone far beyond optical spectroscopy and it is leveraged by a broad variety of fields that perform broadband measurement with excellent frequency resolution and high energy efficiency, while keeping simple detection and acquisition stages. Manifest examples of technologies employing DFC are LIDAR (Light Detection and Ranging), ranging, vibrometry, metrology, waveform characterization, distributed fiber-optic sensing or imaging.

A recent and particularly interesting application of DFC has led to the development of a novel distributed optical fiber sensing technology, known as time-expanded phase sensitive optical time-domain reflectometry (TE-cpOTDR). TE-φOTDR is based on a traditional distributed optical fiber sensing technology, namely φOTDR, where a highly coherent optical pulse is sent to a fiber and the produced Rayleigh backscattering is analyzed to detect and quantify vibrations, strain or temperature variations in the surroundings of the fiber.

φOTDR allows the interrogation of long spans of optical fibers, typically of tens of kilometers, with fast sampling rate, in the order of tens of kilohertz. In the last decade, this technique has attracted much attention from both the scientific and the industrial community. The number of applications benefitting from the interesting advantages of such distributed fiber sensing technique is continuously growing, including structural health monitoring of buildings, pipelines, or dams, perimeter monitoring for safety purposes or, more recently, in seismology and oceanography.

In general, a simple, conventional single-mode fiber serves as the sensing element and the information transmission channel, delivering tens of thousands of "virtual" sensing points highly sensitive and intrinsically synchronized, while the interrogating unit can be safely placed in a convenient, well-conditioned location. However, the relatively poor spatial resolution attained, in the metre scale, has limited their use to the monitoring of large-scale infrastructure.

TE-φOTDR employs a DFC as a probe and LO in a φOTDR configuration. By leveraging the spectral downconversion attained by the use of a DFC (corresponding to a temporal expansion of the resulting traces), centimeter resolution was readily attained over relatively long fibers (100 m) with 100 Hz sampling rates. Such performance was reached with dramatically reduced requirements in the detection and acquisition bandwidths as compared with that imposed by the attained resolution (i.e., <100 kHz detection bandwidth for a resolution implying 10 GHz). However, as in any DFC-based technique, to avoid the aliasing of downconverted tones in the RF domain, the use of DFC imposes a stringent trade-off in the performance parameters of the sensor, namely, resolution (related to the probe OFC bandwidth), range (limited by the probe OFC repetition rate) and sampling rate (given by the offset between probe and LO repetition rates).

One possibility to relax the existing trade-off could be the implementation of a pair of OFC with very dissimilar repetition rates used as probe and LO.

### DESCRIPTION OF THE INVENTION

The present invention refers to a novel method and system that makes use of dual-frequency comb technology to implement a spectral sampling process of media, materials and systems, not necessarily limited to linear time-invariant schemes.

A first object of the invention is a method for measuring the spectral response of a linear system, either a time-invariant or a time-varying system, with a dissimilar pair of optical frequency combs.

As used herein, an "optical frequency comb" may refer to an optical signal whose spectrum comprises a series of discrete, equally spaced frequency lines. An OFC may provide thousands of highly coherent optical frequencies accurately and precisely defined with only two degrees of freedom, namely, the carrier-envelope-offset frequency (CEO frequency) and the comb frequency spacing (or repetition rate). As used herein, a "dissimilar pair of optical frequency combs" may refer to a pair of optical frequency combs that, having a similar CEO frequency, have different repetition rate. The repetition rate of the pair of combs must accomplish that the repetition rate of the faster comb (i.e., the comb with higher repetition rate) is an integer multiple of the repetition rate of the slower comb (i.e., the comb with lower repetition rate) plus a small value referred as offset. The offset is generally much smaller than the repetition rate of the slower comb.

The method comprises injecting one of the combs, known as probe comb, into the system to be spectrally sampled. The probe comb may be the slower comb, at a first repetition rate (***Δf***). The bandwidth (***N*·*Δf***) of the probe signal will depend on the number of lines (***N***) in the comb and its repetition rate (***Δf***).

The method further comprises gathering the optical output signal from the system to be spectrally sampled. The system to be spectrally sampled will be referred herein as "system under test" or "SUT".

In some embodiments, the system under test (SUT) may be a chemical sample whose spectral fingerprint is to be measured using spectroscopy methods. In this case, the output signal is the light that outputs the sample after propagating through it.

In some embodiments, the SUT may also be an optical fiber used as distributed sensor. In this case, the output signal corresponds to the backscattering signal being generated by the optical fiber due to a backscattering process (e.g., Rayleigh, Raman or Brillouin) in response to the injection of the probe signal.

The SUT may be a LIDAR. In this case, the output signal corresponds to the reflected light that return to the receiver in response to the targeting of an object or surface with a laser.

The optical output signal is beaten (in photodetection) with a LO signal to generate a beating signal. The LO signal comprises a second optical frequency comb, mutually coherent with the first comb, at a second repetition rate that is an integer multiple of the first repetition rate plus an offset, e.g., ***Δf'*=*M·Δf*+*****δf**,* with M any positive integer.

Preferably, the repetition rate offset (***δf***) between the first and second comb will be constant (so as to have a constantly increasing separation between blocks of ***M*** lines of the probe comb and each line of the LO comb), but it may also be chosen to vary constantly or variably across the optical frequency comb lines.

As used herein, the term "beating" may refer to obtaining the squared modulus of the sum of the two signals. For the particular case of "beating two optical frequency combs" the resulting beating signal will include a plurality of beating terms spectrally clustered around multiples of the first repetition rate (***Δf***). The spectral region ranging between ***(m-1)·Δf*/*2*** and ***m·Δf*/*2*** is referred as the ***m^{th}*** Nyquist zone, with ***m*** a positive integer. Hence, the ***N*** beating terms carrying the information of the ***N*** optical lines comprising the output signal will be distributed into ***M*** Nyquist zones, having each zone ***~N*/*M*** lines. Beating lines carrying the information of consecutive lines in the optical output signal will be located in consecutive Nyquist zones, starting from the ***M^{th}*** Nyquist zone towards the first Nyquist zone, and then continuing in the ***M^{th}*** Nyquist zone with an additional separation equal to the offset (***δf***).

Thus, the beating signal comprises a set of optical frequency combs in the radio frequency (RF) range that corresponds basically with a set of ***M*** spectrally down-sampled (by a factor of ***N*/*M***) versions of the optical output signal, having each of them a different CEO frequency.

The reason why the denser comb (e.g., with ***N*** lines and repetition rate Δ***f***) may be employed as a probe is because it samples the spectral response of the medium, material or system with higher spectral resolution. The faster comb (with repetition rate Δ***f'***), which may be used as LO, would have **~*N*/*M*** lines if both probe and LO had approximately the same optical bandwidth.

***M*** is the integer factor between the repetition rates of probe and LO. The beating of the two combs distributes the ***N*** lines of the probe in ***M*** Nyquist zones, each having ***~N*/*M*** lines. Since the Nyquist zones are ***M*** times less populated, the condition to avoid spectral aliasing between tones is relaxed in a factor of ***M*.** The price to pay for the relaxation of the mentioned trade-off is that the photodetection bandwidth must be also increased in a factor of ***M*,** although it is still much lower than the nominal bandwidth required for a given temporal resolution in the traditional case.

Since the ***N*** lines of the probe comb are distributed in ***M*** Nyquist zones, a spectral reordering process of lines is required to recover the interferograms in time-domain. However, the spectral distribution of the probe lines across multiples Nyquist zones and the subsequently required spectral reordering is, in principle, incompatible with linear, time-varying systems (LTV). Linear, time-varying systems are systems that accomplish the superposition principle, but their impulse response is not identical for identical input signals with different time delays.

In general, any sensing system can be considered as time-varying, since the perturbation physical variable to be measured will modify the system's impulse response. The spectral reordering required in the cited strategy relies on a Fourier-based analysis, which is only valid in linear, time-invariant systems (LTI).

The following strategy for reordering is proposed so that the method of using two OFC with dissimilar repetition rates gets compatible with LTV systems.

Therefore, in some embodiments the method comprises a subsequent stage of reordering the beating lines, which comprises the following steps:
1. gathering in time-domain an integer number (***P***) of interferograms;
2. apodizing in time domain the set of interferograms simultaneously;
3. performing a Fourier transform over the resulting signal such that the result corresponds to the spectral response of the beating signal, composed of the complete set of beating lines within the photodetection bandwidth;
4. applying a matched filter obtained from a calibration measurement, to compensate for the effect of the photodetector and of any amplitude and/or phase modulation applied over the probe and/or LO combs;
5. reordering the beating lines after the matched filtering considering a spectral band containing ***P*** samples around the sample of each line and carrying the ***M*** Nyquist zones containing the information of interest to baseband in ***M*** different axes, such that:
   a. Odd Nyquist zones are spectrally conjugated;
   b. Even Nyquist zones are spectrally reversed;
   c. ***M*** blocks of ***P*** samples of zeroes are interleaved between each block of ***P*** samples corresponding to the ***N*/*M*** lines of each Nyquist zone;
   d. The comb in the ***m^{th}*** Nyquist zone is spectrally shifted **(*M-m*)*·P*** samples, such that the resulting combs in the **M** axes are overlapped and the bandwidth of the reordered comb is compressed in relation to the probe comb by a factor ***Δf*/*δf***;
6. transforming back the rearranged spectrum into the time domain leading to a temporal signal that includes the ***P*** interferograms;
7. repeating the steps 1-6 for the subsequent sets of ***P*** interferograms.

A second object of the invention is a system for interrogating a SUT, for example, a sensing optical fibre, a transmission optical fibre, a LIDAR system, a time-varying sample, or any other type of system to be spectrally sampled.

The system comprises the SUT that is configured to receive a probe signal. The probe signal comprises a first optical frequency comb at a first repetition rate (***Δf***). The SUT is further configured to generate an output signal in response to the injection of the probe signal. The output signal comprises the probe signal convolved with the impulse response of the SUT, which is sensitive to at least one parameter being measured (parameter of interest).

The system further comprises a photodetector that is configured to beat the output signal received from the SUT with a local oscillator signal. The local oscillator signal comprises a second optical frequency comb at a second repetition rate that is offset from an integer multiple of the first repetition rate (***M·Δf+δf***) and is mutually coherent with the first optical frequency comb.

Preferably, the repetition rate offset (***δf***) between the first and second comb will be constant, but it may also be chosen to vary constantly or variably across the optical frequency comb lines.

Preferably, the photodetector may be a balanced photodetector. The balanced photodetector is able to cancel the non-interferential part of the beating signal so the dynamic range of the beating signal can be better exploited in detection.

The system also comprises an analysis module configured to determine the at least one parameter being measured from the beating signal received in the photodetector. By downconverting the output signal to the RF domain, the impulse response of the SUT can be obtained, provided that the properties of the input probe comb and local oscillator comb are known or controlled. In particular, the analysis module is able to compute the impulse response of the SUT following the described procedure in the method.

Finally, in some embodiments, the analysis module may comprise an acquisition unit and a digitalization unit to acquire and digitize the beating signal prior to compute the impulse response of the SUT.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figs. 1a and 1b Illustrate the known dual comb spectroscopy concept.
Figs. 2a to 2c show the spectral detection of a sample with spectral response H(f) using the proposed dual comb configuration with two combs of dissimilar repetition rates.
Fig. 3 gathers detection schemes according to the invention.
Fig. 4. Is a schematic of the arrangement to implement the interferogram parallelization using optical combs with dissimilar line spacing.
Fig. 5. shows two consecutive interferograms overlapped.
Fig. 6a is a detail of the beating lines belonging to the first Nyquist zone.
Fig. 6b is a detail for the broadening of a beating line after the SUT's impulse response is affected by a perturbation with frequency 100Hz.
Fig. 6c is a detail for the broadening of a beating line after the SUT's impulse response is affected by a perturbation with frequency 200Hz.
Fig. 7 is a flowchart of the acquisition and post-processing method. ***R(f)*** is the spectrum of the acquired set of interferograms and ***M(f)*** is the conditioned spectrum of the reference interferogram. NZ-i stands for the i-th Nyquist zone.

### DESCRIPTION OF A WAY OF CARRYING OUT THE INVENTION

As it is known and as shown in **Fig. 1a****,** an optical frequency comb passes through a sample of interest. This comb samples the absorption features of the sample in magnitude **A_s(f)** and phase ***φ*_*****s (f)**.* A second comb identical to the first one, but with a slight offset of ***δf*** in the line spacing, is used as a reference. To avoid unambiguous downconversion upon detection, the spectral envelope of the probe may be bandlimited using an optical band pass filter BPF, whereas one of the combs may be conveniently frequency shifted. The combs are then mixed and detected.

Then, as shown in **Fig. 1b****,** the photodetected RF signal is composed of clusters of spectral lines with line spacing ***δf*** around multiples of Δ***f***. Each spectral region of width Δ***f*/*2*** starting from DC is known as a Nyquist zone. All the lines of the optical probe comb must be contained within one Nyquist zone to avoid spectral aliasing, in turn imposing a trade-off between optical bandwidth, line spacing and offset. The first Nyquist zone is low-pass filtered (LPF) to keep a comb at RF frequencies containing the complex-envelope information of the absorption feature over a compressed frequency axis.

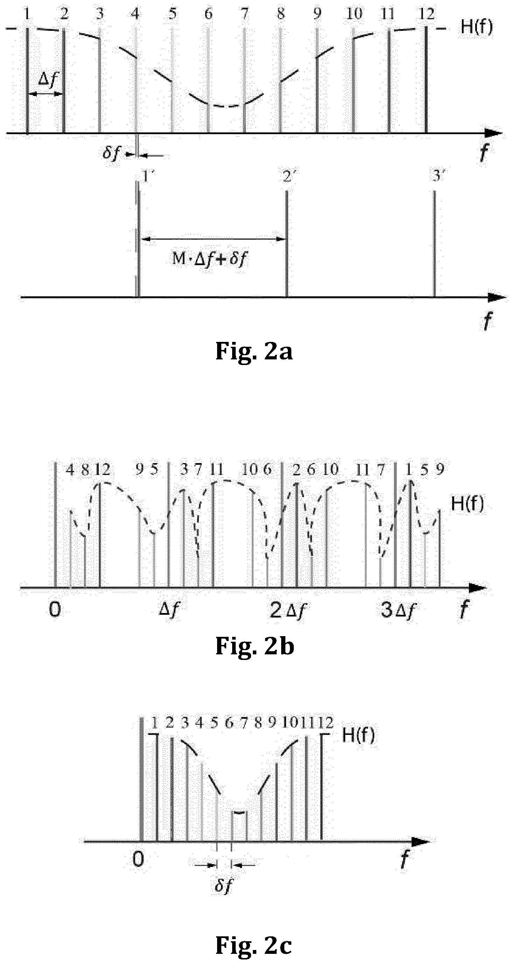

**Figs. 2a to 2c** show the spectral detection of a sample with spectral response ***H(f)*** using the dual comb configuration according to the invention with two combs of dissimilar repetition rates and more specifically an example with ***M*** factor equal to 4 and number of lines ***M*** equal to 12.

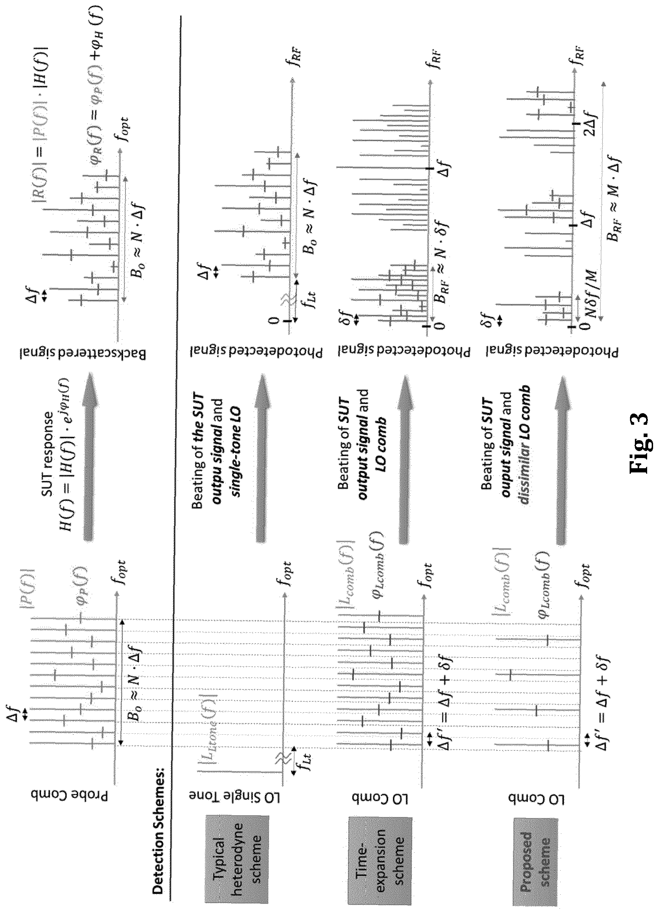

In frequency domain, the output signal is the multiplication of the system's spectral response ***H(f)*** and the probe comb ***P(f)***, as shown in **Fig. 2a****.** Hence, the spectrum of the output signal may be referred as ***R(f)*= *H(f)·P(f)***, as shown in **Fig. 3****.**

The output signal possesses a comb-like spectrum with the same number of lines ***N*** and the same repetition rate ***Δf*** than the probe signal, each line being modulated in amplitude and phase by the spectral response of the SUT. In time-domain, this corresponds to the convolution between the SUT's impulse response ***h(t)*** and the probe signal in time-domain ***p(t)**,* e.g., ***r(t)=h(t)*p(t)***, where * stands for the convolution operator. As previously stated, this Fourier-based analysis would be, in principle, only compatible with LTI systems.

The optical output signal is beaten (in photodetection) with a LO signal to generate a beating signal. The LO signal comprises a second optical frequency comb, mutually coherent with the first comb, at a second repetition rate that is an integer multiple of the first repetition rate plus an offset, e.g., ***Δf'*=*M·Δf*+*****δf**,* with M any positive integer.

Preferably, the repetition rate offset ***δf*** between the first and second comb will be constant so as to have a constantly increasing separation between blocks of ***M*** lines of the probe comb and each line of the LO comb. However, in other embodiments, it may also be chosen to vary constantly or variably across the optical frequency comb lines.

As used herein, the term "beating" may refer to obtaining the squared modulus of the sum of the two signals. For the particular case of "beating two optical frequency combs" the resulting beating signal will include a plurality of beating terms spectrally clustered around multiples of the first repetition rate ***Δf**.* The spectral region ranging between ***(m-1)·Δf*/*2*** and ***m·Δf*/*2*** is referred as the ***m^{th}*** Nyquist zone, with ***m*** a positive integer.

Hence, the ***N*** beating terms carrying the information of the ***N*** optical lines comprising the output signal will be distributed into ***M*** Nyquist zones, having each zone ***~N*/*M*** lines. Beating lines carrying the information of consecutive lines in the optical output signal will be located in consecutive Nyquist zones, starting from the ***M^{th}*** Nyquist zone towards the first Nyquist zone, and then continuing in the ***M^{th}*** Nyquist zone with an additional separation equal to the offset (***δf***).

An example of the distribution of the probe comb lines within the RF spectral domain upon beating with the LO comb and photodetection is shown in **Fig 2b****.** The spectral region covering approximately ***M·Δf*** and containing the beating lines containing the information of the ***N*** lines of the output signal may be selected by either a physical or a digital low pass filter (before or after digitization, respectively).

Thus, the beating signal comprises a set of optical frequency combs in the radio frequency (RF) range that corresponds basically with a set of ***M*** spectrally down-sampled (by a factor of ***N*/*M***) versions of the optical output signal, having each of them a different CEO frequency. The bandwidth requirement for the detection of the set of combs is compressed in relation to that required if the output signal was directly or coherently detected by a factor ***M*/*N,*** as illustrated in **Fig.3****.**

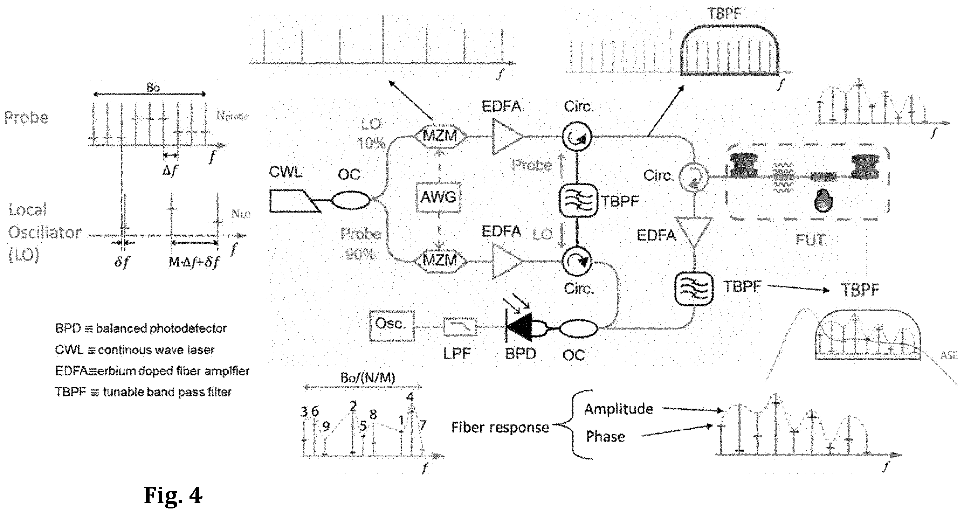

As shown in **Fig. 4****,** the optical output signal and the local oscillator signal are beaten in a balanced photodetector BPD.

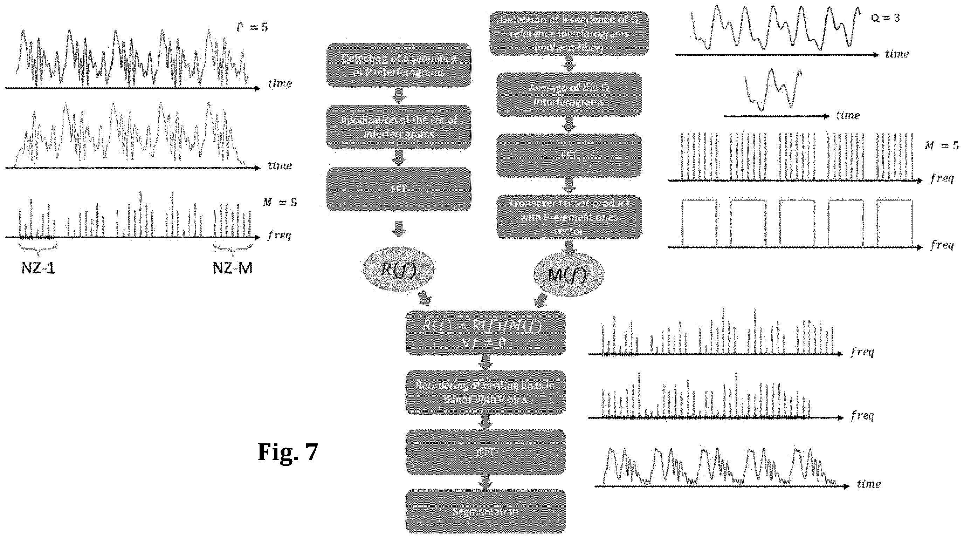

According to an advantageous embodiment of the inventive method, the beating lines are reordered aimed at obtaining a spectrally compressed version of the output signal, with line spacing equal to the offset (***δf***). If the LO comb is not a transform-limited, flat-top optical comb, the compressed comb obtained after the reordering may be subjected to the effect of a linear filter whose spectral response is obtained by repeating each LO line ***M*** times separated ***δf*** (totalling ***N*** lines). For the reordering of lines, the strategy shown in the flowchart of **Fig. 7** is followed:
In time-domain, an integer number of interferograms must be processed at the same time. An interferogram is generally the resulting signal from the interference process between two or more optical signals propagated in an interferometer. In this particular case, the interferogram results from the interference between two optical frequency combs with different line spacing in a Mach Zehnder interferogram, as shown in the circuit schematic in **Fig. 4****.**

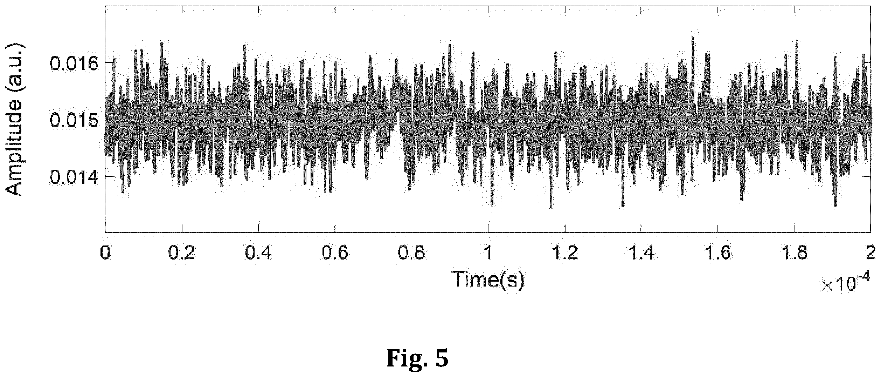

Herein, an "interferogram" may refer to a single period of the beating signal as shown in **Fig. 5****.** The duration of each interferogram (or acquisition period) is equal to the inverse of the offset (i.e., ***1*/*δf***) since ***δf*** is the line spacing of the combs produced upon detection, as shown in Fig. 3. For example, a set of ***P*** consecutive interferograms may be processed simultaneously. ***P*** may be equal than ***M*,** but any other integer number of interferograms could be chosen.

The set of interferograms simultaneously processed may be apodized in time domain. Herein, with "apodized" we refer to the multiplication of the time-domain signal and a windowing signal having smoothly varying leading and trailing edges.

A Fourier transform is performed over the resulting signal. The result corresponds to the spectral response of the beating signal, composed of the complete set of beating lines within the photodetection (or applied low-pass filter) bandwidth. The resulting spectral response has a spectral resolution equal to the offset divided by the number of interferograms simultaneously processed.

For example, if ***P*** interferograms are simultaneously processed, the spectral resolution will be ***δf*/*P*.** That implies that each beating line in the RF domain is separated to adjacent beating lines by ***P*** samples. If the SUT is a linear time-varying system, the variation of the impulse response along the time domain will affect the optical output signal by spectrally broadening the lines. The selected number of interferograms simultaneously processed must be high enough to be able to spectrally resolve the broadening of lines caused by the variation of the SUT's impulse response along time.

A calibration measurement may be also taken. A calibration measurement is obtained by using the exact same configuration as for the measurement of the SUT's impulse response, but without the SUT. The calibration measurement accounts for the photodetector's impulse response and the effect of any optical or electrical filter included in the embodiment. The calibration measurement also accounts for any amplitude and phase modulation included in either the probe or the LO combs.

The calibration measurement acts as a matched filter to compensate for the effect of the photodetector, possible filters and possible combs' modulation in the SUT's impulse response calculation. The calibration measurement is, by definition, linear and time invariant. Therefore, interferograms may be processed individually. The signal-to-noise ratio of the calibration measurement may be increased by averaging several interferograms (e.g., Q interferograms).

The spectral response of the calibration measurement is obtained by Fourier transformation. If the Fourier transform is applied over a single interferogram (or the average of several interferograms), its spectral resolution is ***δf***. Then, a Kronecker tensor product of the calibration spectrum with a P-element vector of ones serves as the matched filter to properly decode the spectral phase of the down-converted output signal. The application of a matched filter consists of dividing the spectral response of the beating signal with the spectral response of the matched filter.

The reordering of the beating lines after the application of the matched filter is made considering a spectral band containing ***P*** samples around the sample of each line, as shown in **Fig. 2****.b.**

One approach to reorder the spectral lines is to carry the ***M*** Nyquist zones containing the information of interest to baseband in M different axes, with the following rules:
a. Odd Nyquist zones must be spectrally conjugated.
b. Even Nyquist zones must be spectrally reversed.
c. ***M*** blocks of ***P*** samples of zeroes are interleaved between each block of ***P*** samples corresponding to the **N/M** lines of each Nyquist zone.
d. The comb in the ***m^{th}*** Nyquist zone is spectrally shifted **(*M-m*)*·P*** samples.
e. Finally, the resulting combs in the ***M*** axes are overlapped (interleaved).
f. The bandwidth of the reordered comb is compressed in relation to the probe comb by a factor ***Δf*/*δf*** (which we will herein refer as "compression factor").

The rearranged spectrum can be transformed back into the time domain leading to a temporal signal that includes the P interferograms. This set of interferograms provides the impulse response of the SUT including the possible variations in time caused by any perturbation.

This strategy is repeated for the subsequent sets of P interferograms.

As shown in **Fig. 4****,** a second object of the invention is a system for interrogating a SUT, for example, a sensing optical fibre, a transmission optical fibre, a LIDAR system, a time-varying sample, or any other type of system to be spectrally sampled.

The system comprises the SUT that is configured to receive a probe signal. The probe signal comprises a first optical frequency comb at a first repetition rate (***Δf***). The SUT is further configured to generate an output signal in response to the injection of the probe signal. The output signal comprises the probe signal convolved with the impulse response of the SUT, which is sensitive to at least one parameter being measured (parameter of interest).

The system further comprises a photodetector that is configured to beat the output signal received from the SUT with a local oscillator signal. The local oscillator signal comprises a second optical frequency comb at a second repetition rate that is offset from an integer multiple of the first repetition rate (***M·Δf*+*δf***) and is mutually coherent with the first optical frequency comb. Preferably, the repetition rate offset (***δf***) between the first and second comb will be constant, but it may also be chosen to vary constantly or variably across the optical frequency comb lines. Preferably, the photodetector may be a balanced photodetector. The balanced photodetector is able to cancel the non-interferential part of the beating signal so the dynamic range of the beating signal can be better exploited in detection.

In the preferred configuration shown in **Fig. 4****,** the combs are generated electro-optically using Mach-Zehnder modulators MZM. The optical components within the two optical couplers OC form a Mach-Zehnder interferometer. In the schematic, the SUT is an optical fibre, and the signal of interest is the Rayleigh backscattering produced in the fibre when the probe signal propagates through it.

The system also comprises an analysis module configured to determine the at least one parameter being measured from the beating signal received in the photodetector. By downconverting the output signal to the RF domain, the impulse response of the SUT can be obtained, provided that the properties of the input probe comb and local oscillator comb are known or controlled. In particular, the analysis module is able to compute the impulse response of the SUT following the described in the method. The analysis module may comprise an acquisition unit and a digitalization unit to acquire and digitize the beating signal prior to compute the impulse response of the SUT.

### Spectral responses

**Fig 2a** is the spectrum of the probe comb and spectral response of the sample (top) and LO comb (bottom). **Fig 2b** is the spectrum of the beating comb once the probe has sampled the sample response. **Fig. 2c** is the spectrum of the beating comb after the reordering process.

The upper row of **Fig. 3** shows the spectral response of a probe comb-like signal (***P(f)***) with ***N*** lines ***Bₒ*=** ***N·Δf**,* which is spectrally phase modulated (with a random phase distribution in the figure). After propagating through the system under test SUT, with spectral response ***H*(*f*)**, the output signal is gathered, with spectral response ***R(f)* = *P(f) H(f).***

A comparative between different types of coherent detection schemes is also shown in **Fig. 3****.** In a typical heterodyne scheme, a single tone LO spectrally separated from the first line of the comb by ***f**_{Lt}* beats with the backscattered signal. Upon photodetection, a copy of the signal to be detected, with bandwidth ***B***ₒ can be found shifted by ***f**_{Lt}* from DC in the positive frequency semi-axis.

To avoid aliasing in the RF domain, either ***f**_{LT}*> ***B*ₒ** or a balanced photodetection must be used. When the time-expansion scheme is employed, the LO is a comb identical to the probe comb except for a slight mismatch in the line spacing.

Upon detection, a spectrally compressed copy of the signal to be detected can be found in the first Nyquist zone, with bandwidth ***B_{RF}=Bₒ δf*/*Δf.***

To avoid aliasing in the RF domain, ***B_{RF}*<*Δf*/*****2**.* According to the invention, a comb with line spacing equal to a multiple of the probe line spacing plus a slight mismatch is used as a LO. The multiplicity factor is called M (M=3 in the figure). Upon photodetection, the **N** lines of the signal to be detected are distributed in **M** Nyquist zones, each one having a bandwidth of ***B_{RF}*/*M.*** Since the Nyquist zones are less populated, the stringent trade-off of the time-expansion scheme can be relaxed in a factor of **M.** The photodetection bandwidth requirement is increased with respect to the conventional time-expansion scheme by a factor of **M,** but is still lower than the typical heterodyne scheme by a factor of ***M*/*N.***

**Fig. 5** shows two consecutive interferograms of duration 0,2 ms overlapped. The interferograms are the result of the beating between two combs. The probe comb has **M** = 600 lines, line spacing of **Δ*f*** = 7.5 MHz (total bandwidth of 4.5 GHz) and propagates through an optical fiber. The output comb is produced by the Rayleigh backscattering of the probe comb propagating through the fiber. The output comb is beat with an LO comb, with line spacing ***Δf*** + ***δf***, being ***δf*** = 5 kHz. The main temporal features appear in the two interferograms, but there are amplitude and phase errors that avoid interferograms to be identical.

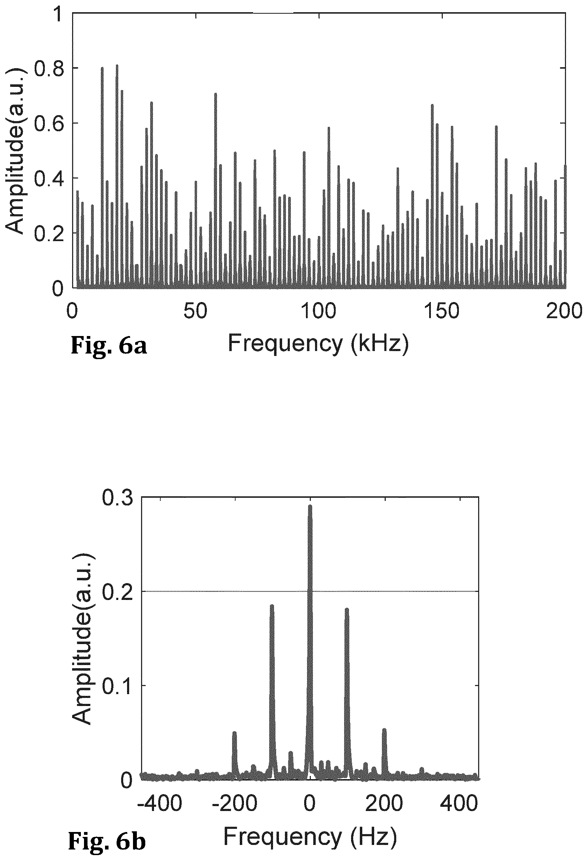

**Fig. 6a** is a detail of the beating lines belonging to the first Nyquist zone in a distributed optical fiber sensing scheme where two OFC with dissimilar repetition rates have been used. In this case, the probe comb has 10.000 lines expanded over a bandwidth of **5 *GHz,*** leading to a line spacing ***Δf*** = **500kHz.** The LO comb is designed with M=100 and ***δf*** = ***2kHz**.* The first Nyquist zone includes ***N*/*M*** lines, corresponding to only 100 lines.

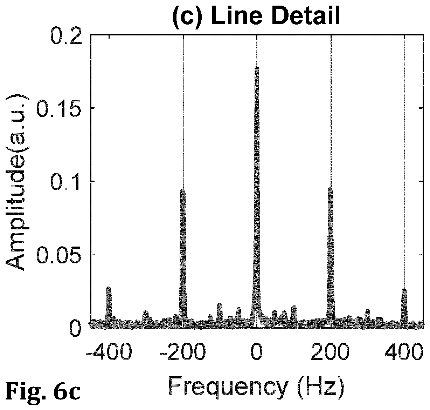

**Fig. 6b** is a detail for the broadening of a beating line after the SUT's impulse response is affected by a perturbation with frequency 100 Hz, in the same configuration than in Fig. 6.a.

**Fig. 6c** is a detail for the broadening of a beating line after the SUT's impulse response is affected by a perturbation with frequency 200Hz, in the same configuration than in Fig. 6.a.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Method for measuring the spectral response of a linear system either time variant or time invariant, which comprises:
- injecting a first optical comb or probe comb into a system to be spectrally sampled, at a first repetition rate (***Δf***), the bandwidth of the probe comb being ***N·Δf**,* wherein **N** is the number of lines in the comb and ***Δf*** is the repetition rate;
- gathering the optical output signal from the system to be spectrally sampled;
- beating the optical output signal with a local oscillator signal to generate a beating signal, wherein the local oscillator signal comprises a second optical frequency comb, mutually coherent with the first comb, at a second repetition rate that is an integer multiple of the first repetition rate plus an offset, ***Δf'*=*M·Δf*+*****δf**,* with ***M*** any positive integer;
such that the **N** beating terms carrying the information of the **N** optical lines comprising the output signal will be distributed into **M** Nyquist zones, each zone having ***~N*/*M*** lines, the ***m^{th}*** Nyquist zone being the spectral region ranging between ***(m-1)·Δf*/*2*** and ***m·Δf*/*****2**,* with **m** a positive integer;
such that the beating lines carrying the information of consecutive lines in the optical output signal will be located in consecutive Nyquist zones, starting from the ***m^{th}*** Nyquist zone towards the first Nyquist zone, and then continuing in the ***m^{th}*** Nyquist zone with an additional separation equal to the offset (***δf***), and
such that the beating signal comprises a set of optical frequency combs in the radio frequency (RF) range that corresponds basically with a set of **M** spectrally down-sampled by a factor of ***N*/*M.***

2. Method according to claim 1 which comprises a subsequent stage of reordering the beating lines, which comprises the following steps:
1. gathering in time-domain an integer number (***P***) of interferograms;
2. apodizing in time domain the set of interferograms simultaneously;
3. performing a Fourier transform over the resulting signal such that the result corresponds to the spectral response of the beating signal, composed of the complete set of beating lines within the photodetection bandwidth;
4. applying a matched filter obtained from a calibration measurement, to compensate for the effect of the photodetector and of any amplitude and/or phase modulation applied over the probe and/or LO combs;
5. reordering the beating lines after the matched filtering considering a spectral band containing ***P*** samples around the sample of each line and carrying the ***M*** Nyquist zones containing the information of interest to baseband in ***M*** different axes, such that:
a. Odd Nyquist zones are spectrally conjugated;
b. Even Nyquist zones are spectrally reversed;
c. ***M*** blocks of ***P*** samples of zeroes are interleaved between each block of ***P*** samples corresponding to the ***N*/*M*** lines of each Nyquist zone;
d. The comb in the ***m^{th}*** Nyquist zone is spectrally shifted **(*M-m*)*·P*** samples, such that the resulting combs in the ***M*** axes are overlapped and the bandwidth of the reordered comb is compressed in relation to the probe comb by a factor ***Δf*/*δf***;
6. transforming back the rearranged spectrum into the time domain leading to a temporal signal that includes the ***P*** interferograms;
7. repeating the steps 1-6 for the subsequent sets of ***P*** interferograms.

3. Method according to any of claims 1 or 2, wherein the repetition rate offset (***δf***) between the first and second comb is constant or varies constantly or variably across the optical frequency comb lines.

4. System for carrying out a method according to claim 1 or claim 2, which comprises a system under test (SUT) that is configured to receive a probe signal, the probe signal comprising a first optical frequency comb at a first repetition rate (**Δ*f***), the SUT being configured to generate an output signal in response to the injection of the probe signal, the output signal comprising the probe signal convolved with the impulse response of the system under test (SUT),
the system comprising a photodetector that is configured to beat the output signal received from the system under test (SUT) with a local oscillator signal (LO), the local oscillator signal (LO) comprising a second optical frequency comb at a second repetition rate that is offset from an integer multiple of the first repetition rate (***M*·*Δf*+*δf***) and is mutually coherent with the first optical frequency comb.

5. System according to claim 4, wherein the repetition rate offset (***δf***) between the first and second comb will be constant, but it may also be chosen to vary constantly or variably across the optical frequency comb lines.

6. System according to any of claims 4 or 5, wherein the photodetector is a balanced photodetector.

7. System according to any of claims 4 to 6, which comprises an analysis module configured to determine the at least one parameter being measured from the beating signal received in the photodetector.

8. System according to claim 7, wherein the analysis module comprises an acquisition unit and a digitalization unit to acquire and digitize the beating signal prior to compute the impulse response of the system under test (SUT).

9. System according to any of the claims 4 to 8, wherein the system under test (SUT) is a chemical sample.

10. System according to any of the claims 4 to 8, wherein the system under test (SUT) is an optical fiber, and more preferably am optical fiber used as a distributed sensor.

11. System according to any of the claims 4 to 8, wherein the system under test (SUT) is a LIDAR.
